# EUROPÄISCHE PATENTANMELDUNG

(11) **EP 4 804 136 A2**
(43) Veröffentlichungstag der Anmeldung: **09.09.2026**
(21) Anmeldenummer: 26157852.0
(22) Anmeldetag: 11.02.2026
(51) Int. Cl.: G06V 10/25, G06V 10/26, G06V 10/82, G06V 20/52

(54) **VERFAHREN UND SYSTEME ZUR VISUELLEN ZUSTANDSBESTIMMUNG EINER MASCHINENLINIE**

(30) Priorität: 03.03.2025 DE 102025107971
(71) Anmelder: Krones AG, 93073 Neutraubling (DE)
(72) Erfinder: Javir, Simran, 93073 Neutraubling (DE); Alsheikh, Ahmad, 93073 Neutraubling (DE); Albrecht, Thomas, 93073 Neutraubling (DE)
(74) Vertreter: Grünecker Patent- und Rechtsanwälte PartG mbB

(57) **Zusammenfassung**

Die vorliegende Erfindung betrifft verschiedene Verfahren und Systeme zum Erzeugen von Steuerparametern einer Maschinenlinie, insbesondere einer Maschinenlinie zum Abfüllen und Verpacken von Lebensmitteln und/oder Getränken. Dabei stellt die vorliegende Erfindung eine neue Herangehensweise an die präzise Analyse von Belegungsgraden in Abfüllsystemen vor, indem sie moderne, Transformer-basierte KI-Modelle verwendet. Die verschiedenen hierfür entwickelten Modelle sind beispielsweise ein Segmentierungsmodell, ein Ähnlichkeitsmodell und ein Objekterkennungsmodell, die jeweils mit einer Bildquelle, wie einem Video-Stream, verbunden sind in Echtzeit einen Zustand einer Maschinenlinie auswerten und darauf reagieren können. Mögliche Zustände, die vom System dabei erfasst werden können, sind beispielsweise ein Belegungsgrad des Transportabschnitts, eine Anzahl von Getränkebehältern auf dem Transportabschnitt, ein Stau der Getränkebehälter auf dem Transportabschnitt, und/oder eine Anomalie eines oder mehrerer Getränkebehälter.

## Beschreibung

Die Erfindung betrifft Verfahren und Systeme zum Erzeugen von Steuerparametern einer Maschinenlinie, insbesondere einer Maschinenlinie zum Abfüllen und Verpacken von Lebensmitteln und/oder Getränken.

Die fortschreitende Automatisierung und Effizienzsteigerung in industriellen Prozessen führt dazu, dass Maschinenlinien, wie beispielsweise Abfüllsysteme für Getränke und Lebensmittel zunehmend komplexer werden. Eine wichtige Bedeutung in modernen Abfüllanlagen betrifft die präzise Steuerung der Maschinenleistung und der Transportgeschwindigkeit, um eine hohe Produktivität sicherzustellen und gleichzeitig Produktionsstörungen zu vermeiden. Für diese Steuerung ist die Erfassung und Bewertung der Belegungsgrade entlang der Förder- und Puffersegmente essentiell. Die Belegungsgrade dienen als Grundlage für Entscheidungen zur Anpassung der Maschinenleistung sowie der Geschwindigkeit von Transportmitteln, um eine gleichmäßige Materialflusssituation zu gewährleisten.

Herkömmlicherweise basiert die Bewertung der Belegungsgrade in Abfüllsystemen auf dem Einsatz von klassischen Sensoren, die strategisch entlang der Förder- und Puffersegmente positioniert werden, um die Maschinenoperationen zu überwachen und zu regulieren. Durch die Erfassung von Belegungsdaten ermöglichen die Sensoren eine Steuerung der Ausgabekapazität der Maschinen und der Geschwindigkeit der Transportmittel. Genau gemessene Belegungsgrade sind wichtig, um Staus und Ansammlungen von Behältern in bestimmten Bereichen zu vermeiden, indem rechtzeitig Anpassungen an Maschinenleistung oder Transportgeschwindigkeit vorgenommen werden.

Eine alternative Technologie zur Messung der Belegungsgrade nutzt maschinelle Sehmodelle wie Bildsegmentierung und Objekterkennung mittels klassischer Kl. Diese Ansätze verwenden Kamerasysteme und Algorithmen, um visuelle Daten zu analysieren und daraus Informationen über den Belegungsgrad zu gewinnen.

Trotz ihrer weiten Verbreitung weisen die traditionellen sensorbasierten Verfahren jedoch einige Nachteile auf. Insbesondere bei Transportmitteln oder Puffersystemen mit mehreren Spuren oder komplexen Geometrien können die Sensoren keine präzisen Messungen liefern, da die Sensoren immer nur bestimmte Bereiche abdecken können. Dies führt zu ungenauen Belegungsdaten, die sich negativ auf die Effizienz des Gesamtsystems auswirken. Die Konsequenzen dieser Ungenauigkeiten führen zu ineffizienter Maschinensteuerung, zu Transportstörungen, wodurch Staus entstehen oder Produkte beschädigt werden können, oder gar zu Produktionsverlusten.

Verfügbare maschinelle Sehmodelle bieten zwar eine genauere Messung der Belegungsgrade über einen größeren Bereich, sind jedoch mit hohen Kosten und Aufwand verbunden. Ihre Implementierung erfordert mehrere Schritte, darunter die Datensammlung, das Training der Modelle sowie die fortlaufende Anpassung an neue Produkte oder veränderte Umgebungsbedingungen, wie beispielsweise unterschiedliche Lichtverhältnisse. Beispielsweise erfordern solche Systeme, die mittels klassischer neuronaler Netze trainiert werden für jede Abänderung in der Produktion (z.B. neue Produkte, neues Flaschen-Design, etc.) neue Trainingsdaten und müssen "nachtrainiert" werden. Diese Anforderungen machen die Technologie zeit- und ressourcenintensiv, was ihre breite Anwendbarkeit in der Praxis einschränkt.

Es besteht daher Bedarf für verbesserte Systeme und Verfahren zum Erzeugen von Steuerparametern einer Maschinenlinie.

Die Aufgabe wird erfindungsgemäß durch Systeme gemäß den Ansprüchen 1, 5 und 9, sowie durch Verfahren gemäß den Ansprüchen 12, 13 und 14 gelöst. Ausführungsformen und Weiterbildungen sind in den Unteransprüchen erfasst.

Eine Ausführungsform betrifft ein System zum Erzeugen von Steuerparametern für eine Maschinenlinie, insbesondere für eine Maschinenlinie zum Abfüllen und Verpacken von Lebensmitteln und/oder Getränken. Das System umfasst die Maschinenlinie, eine Bildquelle zum Bereitstellen von Videoframes von einer Aufnahme der Maschinenlinie und eine Computervorrichtung, die einen Prozessor und einen mit dem Prozessor verbundenen Speicher umfasst. Die Computervorrichtung ist ausgelegt zum Bereitstellen und Ausführen von verschiedenen Modulen. Ein erstes Modul ist ein Segmentierungsmodell, das Videoframes von der Bildquelle erhält und eine Vielzahl von Objekten in einem ersten Videoframe segmentiert und klassifiziert. Ein zweites Modul ist ein Prompt-Encoder, der mit dem Segmentierungsmodell funktionell verbunden ist und eine Auswahl von klassifizierten Objekten in dem ersten Videoframe trifft. Ein erstes klassifiziertes Objekt ist dabei ein Transportabschnitt der Maschinenlinie, und ein zweites klassifiziertes Objekt ist ein Getränkebehälter auf dem Transportabschnitt der Maschinenlinie. Ein drittes Modul ist ein Tracker, der alle Objekt-Instanzen aus der Klasse der ausgewählten klassifizierten Objekte in wenigstens einem folgenden Videoframe identifiziert und verfolgt. Gemäß einem beispielhaften Ausführungsbeispiel umfasst das Segmentierungsmodell einen Bildencoder, der das Eingangsbild, also den Videoframe, analysiert und seine Schlüsselfunktionen (Features) extrahiert. Ein Punkt-Decoder kann dann mit einem Raster von Schlüsselpunkten versorgt werden, das aus einem 2D-Array besteht und das gesamte Bild des Videoframes abdeckt. Diese Punkte können automatisch zugewiesen werden und zusammen mit dem Videoframe codiert werden. Jeder Schlüsselpunkt kann dabei einer potenziellen Position eines Objekts oder eines Teils davon entsprechen. Der Punkt-Decoder kann ein vortrainiertes Segmentierungsmodell verwenden, um mögliche Objekte in dem Videoframe zu lokalisieren. In einem Masken-Decoder können die Informationen aus dem Bild-Encoder und dem Punkte-Decoder zusammengeführt werden, um eine Maske zu generieren, die alle Objekte im Bild präzise umreißt. Der Prozessor kann dann einen Zustand der Maschinenlinie basierend auf den Daten des Trackers ermitteln und Steuerparameter für die Maschinenlinie, basierend auf dem ermittelten Zustand der Maschinenlinie erzeugen.

In einem Ausführungsbeispiel kann auch ein traditionelles Segmentierungsmodell verwendet werden, das mit einem allgemeinen Datensatz trainiert wurde, der eine standardisierte Netzwerkarchitektur hat (convolution neural network). Dieses traditionelle Segmentierungsmodell kann dann für neue Objekte und/oder Beleuchtungsbedingungen nachtrainiert werden, um beispielsweise auf spezielle Behälter und/oder spezielle Umgebungsbedingungen angepasst zu werden.

Eine weitere Ausführungsform betrifft ein System, das ebenfalls die Maschinenlinie, eine Bildquelle zum Bereitstellen von Videoframes von einer Aufnahme der Maschinenlinie und eine Computervorrichtung, die einen Prozessor und einen mit dem Prozessor verbundenen Speicher umfasst. Die Computervorrichtung stellt in dieser Ausführungsform ein Ähnlichkeitsmodell zur Verfügung, das einen Bild-Encoder umfasst. Das Ähnlichkeitsmodell empfängt einen ersten Videoframe von der Bildquelle und legt eine visuelle Repräsentation eines oder mehrerer Zielobjekte fest. Dann codiert das Modell den ersten Videoframe zusammen mit der visuellen Repräsentation des einen oder der mehreren Zielobjekte. Beim Codieren wird dabei zunächst der erste Videoframe in ein Raster aus viereckigen Bereichen unterteilt und Merkmale werden aus jedem der extrahierten viereckigen Bereiche extrahiert. Merkmale können insbesondere Farbbereiche, Konturen, Formen, Kanten, etc. sein. Daraufhin wird ein Dichtewert für jeden der extrahierten viereckigen Bereiche bestimmt. Diese Dichtewertbestimmung basiert auf einer Ähnlichkeit des entsprechenden viereckigen Bereichs mit der visuellen Repräsentation des einen oder der mehreren Zielobjekte oder eines Teils davon. Danach wird eine Dichtekarte für den Videoframe bestimmt werden. Nachdem die Codierung mit dem Erstellen der Dichtekarte abgeschlossen ist, kann die Dichtekarte vom Prozessor in eine Verteilung einer tatsächlichen Anzahl von Zielobjekten innerhalb des bestimmten Bereichs der Maschinenlinie umgewandelt werden, bevor basierend auf der tatsächlichen Anzahl von Zielobjekten entsprechende Steuerparameter erzeugt werden.

Eine weitere Ausführungsform betrifft ein System, das ebenfalls die Maschinenlinie, eine Bildquelle zum Bereitstellen von Videoframes von einer Aufnahme der Maschinenlinie und eine Computervorrichtung, die einen Prozessor und einen mit dem Prozessor verbundenen Speicher umfasst. Die Computervorrichtung stellt in dieser Ausführungsform ein Objekterkennungsmodell zur Verfügung. Das Modell besteht aus einem Bildencoder, der das Eingangsbild analysiert und seine Schlüsselfunktionen (Features) extrahiert. Ein Punkt-Decoder wird dann mit einem Raster von Schlüsselpunkten versorgt, das aus einem 2D-Array besteht und das gesamte Bild abdeckt. Diese Punkte werden automatisch zugewiesen und zusammen mit dem Bild codiert. Jeder Schlüsselpunkt kann dabei einer potenziellen Position eines Objekts oder eines Teils davon entsprechen. Der Punkt-Decoder kann ein vortrainiertes Segmentierungsmodell verwenden, um mögliche Objekte in dem Videoframe zu lokalisieren. In einem Masken-Dekoder werden die Informationen aus dem Bild-Encoder und dem Punkte-Decoder zusammengeführt, um eine Maske zu generieren, die alle Objekte im Bild präzise umreißt. Anschließend werden die erstellten Masken basierend auf einer Auswahl einer Repräsentation eines oder mehrerer Zielobjekte klassifiziert und gefiltert. Dabei werden durch die gefilterte Klassifizierung nur die Klasse des einen oder der mehreren Zielobjekte ausgewählt. Basierend auf der gefilterten Klassifizierung werden dann eine Anzahl von Zielobjekten und ein Zustand der Maschinenlinie ermittelt, um Steuerparameter für die Maschinenlinie zu erzeugen.

Gemäß einem Ausführungsbeispiel benötigen die drei oben beschriebenen Ausführungsformen einen Prompt (also ein bestimmtes Zielobjekt), um das encodierte Bild/Video zu finden. Jedoch können die Ausführungsformen auch in ein logisches Konzept integriert werden, das automatisch die Prompt-Punkte (oder Zielobjekte) für den Transport und den Massenstrom definieren kann, so dass ein Modell bereitgestellt wird, das keine weitere Benutzereingabe erfordert und bei dem nur ein Video oder Live-Stream Frame für das Modell benötigt wird. Das Modell wird dann beginnen, den Massenstrom und den Transport zu maskieren, ohne dass ein weiteres Training benötigt wird und ohne jegliche Intervention.

Die oben beschriebenen Ausführungsformen können jeweils dazu genutzt werden, um einen Belegungsgrad des Transportabschnitts, und/oder eine Anzahl von Getränkebehältern auf dem Transportabschnitt, und/oder einen Stau der Getränkebehälter auf dem Transportabschnitt, und/oder eine Anomalie eines oder mehrerer Getränkebehälter zu erfassen und entsprechend darauf mittels Steuerparametererzeugung zu reagieren.

Weitere Ausführungsformen betreffen entsprechende Verfahren, die durch eine Computervorrichtung ausgeführt werden können.

Beispielhafte Aspekte der Erfindung sind in den Zeichnungen dargestellt. Es zeigen:
**Figur 1****:** eine Bildaufnahme von einer Videokamera auf einen Transportabschnitt einer Abfüllanlage;
**Figur 2****:** die durch die hierin beschriebene Techniken und KI-Modelle verarbeitete Bildaufnahme;
**Figur 3****:** eine beispielhaften Repräsentation eines Ausschnitts einer Dichtekarte;
**Figur 4****:** eine beispielhafte Anlagenkonfiguration für PET-Behälter und Klebegebinde;
**Figur 5****:** eine beispielhafte Anlagenkonfiguration für PET-Behälter und Schrumpfpacker;
**Figur 6****:** eine beispielhafte Anlagenkonfiguration für Dosen oder Glasflaschen;
**Figur 7****:** eine beispielhafte Anlagenkonfiguration für Dosen; und
**Figur 8****:** ein beispielhaftes System, das für die Implementierungen der verschiedenen Modelle ausgelegt ist.

Die vorliegende Erfindung stellt eine neue Herangehensweise an die präzise Analyse von Belegungsgraden in Abfüllsystemen vor, indem sie moderne, Transformer-basierte Kl-Modelle verwendet. Diese Modelle nutzen ein neues Konzept der künstlichen Intelligenz, die sogenannte Seff-Attention-Mechanik, welche ursprünglich für die Verarbeitung natürlicher Sprache entwickelt wurde. Gemäß der vorliegenden Erfindung werden diese Modelle für die Analyse von Bild- bzw. Videodaten eingesetzt, um präzise Rückschlüsse auf einen Zustand der Maschinenlinie und insbesondere des Transportsystems, wie beispielsweise den Belegungsgrad zu ziehen. Dies ist auch in hochkomplexen Produktionsumgebungen möglich, ohne dass die Modelle zuvor speziell für solche Aufgaben oder Bildtypen trainiert werden müssen.

Transformer-Modelle sind fortschrittliche Konzepte im Bereich der KI, die auf dem Prinzip der Self-Attention basieren, das es einem Modell ermöglicht, Beziehungen zwischen den einzelnen Teilen eines Eingabedatensatzes, wie beispielsweise Wörter in einem Text oder Pixel in einem Bild, zu erkennen. Im Unterschied zu herkömmlichen neuronalen Netzen, die Eingaben oft sequenziell verarbeiten, erlauben Transformer-Modelle eine parallele Verarbeitung großer Datenmengen. Dadurch können sie sowohl lokale als auch globale Muster in den Daten erkennen und analysieren.

Die Self-Attention-Mechanik ist dabei besonders leistungsfähig, da sie jedem Teil der Eingabedaten einen sogenannten Aufmerksamkeitswert zuteilt und dessen Relevanz im Kontext des gesamten Datensatzes bewertet. Auf diese Weise können Transformer-Modelle übergreifende Zusammenhänge erkennen, beispielsweise wie verschiedene Bereiche eines Bildes miteinander interagieren oder welche Merkmale besonders wichtig für eine bestimmte Aufgabe sind.

Obwohl Transformer-Modelle ursprünglich für sprachliche Daten (Text) entwickelt wurden, haben sie sich inzwischen als äußerst effektiv in der Verarbeitung von Bild- und Videodaten erwiesen. Hierbei analysieren die Modelle die räumlichen und zeitlichen Beziehungen zwischen den Pixeln eines Bildes oder den Frames eines Videos. Dadurch können sie komplexe Muster und Strukturen in visuellem Material erkennen, was sie ideal für Aufgaben wie Bildsegmentierung und Objekterkennung macht.

Ein Vorteil der hierin verwendeten Technologie betrifft deren Flexibilität. Die hierin beschrieben Transformer-basierten Modelle können nach dem ersten Training dauerhaft verwendet werden und können auch dann weiterhin (d.h. ohne Feinabstimmung oder Nachtraining) verwendet werden, wenn sich die Geometrie der Anlage, das Design, die Art, oder die Form der Getränkebehälter oder sonstige optische Eigenschaft in der Anlagenumgebung ändern. Es ist kein separates Training für verschiedene Abfüllanlagen oder für verschiedene Produkte auf dem Transportbereich nötig. Dies macht die Modelle besonders robust gegenüber Veränderungen, wie der Einführung neuer Produktarten, variierender Lichtverhältnisse oder unterschiedlicher Anordnungen von Förder- und Puffersegmenten.

Die Anwendung der verschiedenen hierin beschriebenen Transformer-basierten KI-Ansätzen in Abfüllsystemen bringt somit verschiedene Vorteile gegenüber traditionellen Systemen mit sich.

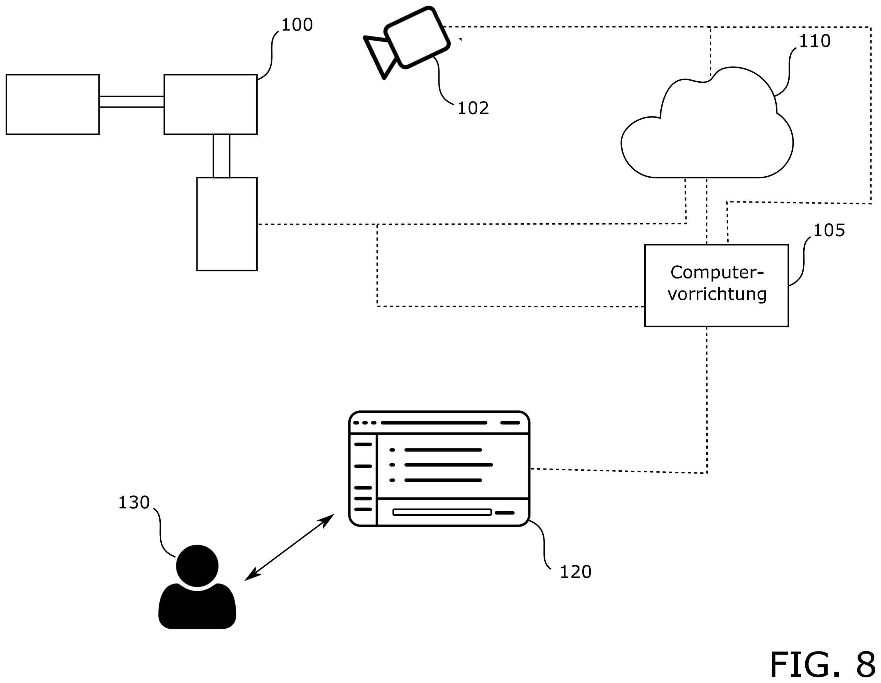

Im Folgenden werden verschiedene mögliche Implementierungen in Form verschiedener Systeme und Verfahren vorgestellt, mit welchen die oben beschriebenen Vorteile erreicht werden können. Eine beispielhafte Architektur, in welcher die Modelle gemäß der Erfindung implementiert werden kann ist in Figur 8 gezeigt.

Die hierin beschriebenen Systeme zum Erzeugen von Steuerparametern für eine Maschinenlinie 100 umfassen alle eine entsprechende Bildquelle 102 zum Bereitstellen von Videoframes einer Aufnahme der Maschinenlinie 100. Diese Bildquelle 102 ist beispielsweise eine Videokamera, deren Ausgabe direkt oder indirekt wie beispielsweise über ein Netzwerk und eine Cloud 110 an eine entsprechende Computervorrichtung 105 übertragen wird.

Die Computervorrichtung 105 umfasst alle nötigen Hardware-Komponenten, um die entsprechenden auf Transformer-Technologie basierenden Modelle auszuführen. Dazu gehört jedenfalls ein entsprechender Prozessor und Speicher, in dem die Modelle abgespeichert sind.

Die Computervorrichtung 105 kann direkt mit der Kamera 102 verbunden sein, oder kann Teil der Cloud 110 sein oder kann über die Cloud 110 mit der Kamera 102 verbunden sein. Außerdem kann die Computervorrichtung 105 direkt in die Kamera 102 integriert sein (Smartkamera). Weiterhin kann die Computervorrichtung 105 direkt oder indirekt (z.B. über die Cloud 110) mit der Maschinenlinie 100 verbunden sein, um beispielsweise Steuerparameter an die Maschinenlinie 100 zu übertragen. Ein Bediener 130 kann mittels einer grafischen Benutzerschnittstelle 120 die Computervorrichtung 120 bedienen.

Gemäß einer ersten beispielhaften Implementierung können mehrere Algorithmen/Modelle implementiert sein, die zusammen das gewünschte Ergebnis (wie beispielsweise eine Staulokalisierung, ein Belegungsgrad, eine Fremdkörper- oder Anomaliedetektion, etc.) ohne jegliches Eingreifen eines Bedieners ausgeben können.

Vereinfacht gesagt, werden in der ersten beispielhaften Implementierung die Bildquelle (z.B. die Kamera 102) und die Computervorrichtung 105 verwendet, um Daten zu erfassen. Anschließend wird die Auswahl des gewünschten Objekts (z.B. Flasche) sowie eines Grenzpuffers oder Transportabschnitts nur für den ersten Frame bestimmt. Der Algorithmus wird das Objekt in diesem Frame erkennen und ein Tracker wird das Objekt automatisch entlang der Transportstrecke verfolgen und somit den Belegungsgrad in jedem einzelnen Frame entsprechend berechnen. Diese Informationen kann an eine Steuerung weitergeben werden, um die Leistung der zugehörigen einzelnen Maschinen zu regulieren.

Dabei wird hier ein Segmentierungsmodell verwendet, das mit einem Prompt-Encoder (wie beispielsweise einem Benutzereingabe-Encoder) verbunden ist. Der Prompt-Encoder kann es dem Benutzer ermöglichen, einen oder mehrere Punkte und/oder ein oder mehrere Kästchen zu platzieren oder einen Text für ein gewünschtes Objekt, bzw. eine beispielhafte Instanz eines gewünschten Objekts innerhalb eines aufgenommenen Frames einzugeben, das segmentiert und verfolgt werden soll. Dieser Prompt-Encoder umfasst die Möglichkeit, die Grenze manuell auszuwählen oder sie kann auch automatisch ausgewählt werden, um nachfolgend deren Belegungsgrad zu berechnen.

Allgemein ist das Segmentierungsmodel dazu ausgelegt, Videoframes von der Bildquelle 102 zu erhalten und eine Vielzahl von Objekten in einem ersten Videoframe zu segmentieren und klassifizieren. Die Klassifizierung erfolgt dabei noch nicht zwangsweise nach der Art des erkannten Objekts, sondern basiert zunächst darauf, dass das Modell ein Objekt als eigenständige Instanz erkennt. Beispielhafte Segmentierungstechniken, die in der Erfindung Verwendung finden können sind Semantische Segmentierung, Instanzsegmentierung und Panoptische Segmentierung, die sich durch ihre Ziele und Anwendungsszenarien unterscheiden.

Die semantische Segmentierung konzentriert sich darauf, jedes Pixel eines Bildes einer bestimmten Klasse zuzuweisen, unabhängig davon, ob es sich um unterschiedliche Instanzen derselben Klasse handelt. Beispielsweise würde bei der semantischen Segmentierung der gesamte Bereich, der zu "Autos" gehört, als eine Klasse markiert, ohne zwischen einzelnen Fahrzeugen zu unterscheiden. Diese Methode ist besonders nützlich für Szenarien, in denen die Erfassung der räumlichen Verteilung von Klassen entscheidend ist. Die Instanzsegmentierung erweitert die semantische Segmentierung, indem sie nicht nur die Klassenzugehörigkeit jedes Pixels bestimmt, sondern auch zwischen verschiedenen Instanzen derselben Klasse unterscheidet. In einem Bild mit mehreren Fahrzeugen würde die Instanzsegmentierung beispielsweise jedes Fahrzeug als eine separate Entität markieren. Die panoptische Segmentierung kombiniert schließlich die Ansätze der semantischen und Instanzsegmentierung in einem einzigen Rahmen. Sie segmentiert sowohl semantische Klassen für Hintergrundbereiche (z. B. Himmel oder Straßen) als auch individuelle Instanzen von Objekten im Vordergrund (z. B. Fußgänger oder Fahrzeuge). Dadurch bietet sie eine vollständige Darstellung der Szene.

In den Ausführungsformen der Erfindung wird (soweit nichts anderes erwähnt) die semantische Segmentation verwendet, da es in der Regel nicht erforderlich ist, zwischen verschiedenen Getränkebehältern auf einem Fließband zu unterscheiden, wenn nur ein Belegungsgrad oder eine Belegungsverteilung ermittelt werden soll. Dabei kann das Segmentierungsmodell jedoch auch zwischen (normal) aufrechtstehenden Behältern und zwischen (abnormal) umgefallenen/querliegenden Behältern unterscheiden, indem es die "normalen" und "abnormalen" Behälter in zwei unterschiedliche Klassen einteilt. Es kann bei einem Sortenwechsel z.B. von Sorte A nach Sorte B jedoch notwendig sein, die Sorte A von der Sorte B zu unterscheiden, um beispielsweise immer eine Lücke zwischen den Sorten zu garantieren und eine Durchmischung der Sorten zu vermeiden.

Das hierin verwendete Segmentierungsmodell wurde mit einem riesigen Datensatz trainiert, der eine enorme Anzahl von beschrifteten Masken enthält. Dabei können einige der Daten öffentlich und andere privat sein. Daher kann das Modell bei jedem neuen Eingabefall/Anwendungsfall verallgemeinern, ohne das Modell auf einem neuen Datensatz feinabstimmen oder neu trainieren zu müssen.

Der Prompt-Encoder ist mit dem Segmentierungsmodell funktionell verbunden und ist dazu ausgelegt ist, eine Auswahl von klassifizierten Objekten in dem ersten Videoframe zu treffen. Ein erstes klassifiziertes Objekt ist dabei ein entsprechender Transportabschnitt der Maschinenlinie. Diese Auswahl kann, wie oben beschrieben, beispielsweise von einem Benutzer einmalig getroffen werden. In alternativen Ausführungsformen kann das Modell jedoch auch schon vorab so trainiert werden, dass es Transportbereiche automatisch erkennt und der entsprechenden von dem Segmentierungsmodell ausgegebenen Klasse direkt das Attribut "Transportbereich" zuweist. Ein zweites klassifiziertes Objekt, ist ein Getränkebehälter auf dem Transportabschnitt der Maschinenlinie. Das bedeutet nicht zwangsläufig, dass das Modell von vornherein weiß, was ein Getränkebehälter ist, oder wie ein solcher aussieht, jedoch erkennt das Segmentierungsmodell, dass alle in dem Frame abgebildeten Getränkebehälter zu einer einzigen Klasse gehören. Durch den Prompt-Encoder kann dieser Klasse das Attribut "Getränkebehälter" zugewiesen werden. Dies geschieht entweder durch den Benutzer, oder durch automatisches Erkennen.

Das Segmentierungsmodell hat somit eine Maske für beispielsweise alle Getränkebehälter erstellt.

Anschließend wird das Segmentierungsmodell mit einem speziellen Tracker verbunden, der dazu ausgelegt ist, alle Objekt-Instanzen aus der Klasse der ausgewählten klassifizierten Objekte in wenigstens einem folgenden Videoframe zu identifizieren und zu verfolgen, bzw. die erstellte Maske durch die nachfolgenden Frames zu verfolgen. Somit kann zu jeder Zeit (also für jeden Frame) ein Zustand der Maschinenlinie ermittelt werden und ein oder mehrere entsprechende Steuerparameter für die Maschinenlinie, basierend auf dem ermittelten Zustand der Maschinenlinie erzeugt werden.

Bei diesem Verfahren basiert die Regulierung der Leistung der einzelnen Maschinen auf der Anzahl der erkannten/beschrifteten Pixel des ausgewählten/gewünschten Objekts im Verhältnis zur Gesamtanzahl der Pixel in einem bestimmten Puffer oder Transportabschnitt, der manuell oder automatisch ausgewählt wurde.

Der ermittelte Zustand der Maschinenlinie 100 kann dabei verschiedene Zustände des Transportsystems umfassen. Beispiele hierfür können ein Belegungsgrad des Transportabschnitts, eine Anzahl von Getränkebehältern auf dem Transportabschnitt, ein Stau der Getränkebehälter auf dem Transportabschnitt, das Stauende und/oder der Stauanfang einer bestimmten Sorte und/oder eine Anomalie eines oder mehrerer Getränkebehälter sein, wie beispielsweise eine umgefallene oder beschädigte Flasche oder Dose.

Gemäß einem beispielhaften Ausführungsbeispiel umfasst das Segmentierungsmodell einen Bildencoder, der das Eingangsbild, also den Videoframe, analysiert und seine Schlüsselfunktionen (Features) extrahiert. Ein Punkt-Decoder kann dann mit einem Raster von Schlüsselpunkten versorgt werden, das aus einem 2D-Array besteht und das gesamte Bild des Videoframes abdeckt. Diese Punkte können automatisch zugewiesen werden und zusammen mit dem Videoframe codiert werden. Jeder Schlüsselpunkt kann dabei einer potenziellen Position eines Objekts oder eines Teils davon entsprechen. Der Punkt-Decoder kann ein vortrainiertes Segmentierungsmodell verwenden, um mögliche Objekte in dem Videoframe zu lokalisieren. In einem Masken-Decoder können die Informationen aus dem Bild-Encoder und dem Punkte-Decoder zusammengeführt werden, um eine Maske zu generieren, die alle Objekte im Bild präzise umreißt.

Wie bereits beschrieben, basiert das Segmentierungsmodell auf Transformer-Technologie, das mittels Self-Attention-Mechanismen und positioneller Kodierung globale und kontextuelle Beziehungen zwischen Bildbereichen erfassen kann, um eine präzise Objekterkennung und Segmentierung zu ermöglichen. Das Segmentierungsmodell wird dabei mit einem Datensatz trainiert, der eine so große Anzahl von beschrifteten Masken umfasst, dass das Segmentierungsmodell für eine Vielzahl von Eingabefällen oder Anwendungsfällen einsetzbar ist, ohne das Segmentierungsmodell auf einem neuen Datensatz neu trainiert oder feinabgestimmt werden muss.

Diese Implementierung ermöglicht somit den automatisierten Workflow mit null Eingriffen, um benötigte Informationen zur Steuerung und Regulierung der Maschinenleistung auf Basis genauer Belegungsgradmessungen zu liefern, ohne dass es notwendig ist, einen neuen Datensatz zu sammeln, das Modell für einen spezifischen/neuen Fall/Aufgabe noch einmal zu feinabstimmen oder neu zu trainieren. Diese Implementierung ermöglicht auch die automatische Beschriftung neuer Datensätze, die zur Schulung von Modellen für andere Aufgaben mit null Eingriffen verwendet werden würden.

In einem Ausführungsbeispiel kann jedoch auch ein traditionelles Segmentierungsmodell verwendet werden, das mit einem allgemeinen Datensatz trainiert wurde, der eine standardisierte Netzwerkarchitektur hat (convolution neural network). Dieses traditionelle Segmentierungsmodell kann dann für neue Objekte und/oder Beleuchtungsbedingungen nachtrainiert werden, um beispielsweise auf spezielle Behälter und/oder spezielle Umgebungsbedingungen angepasst zu werden.

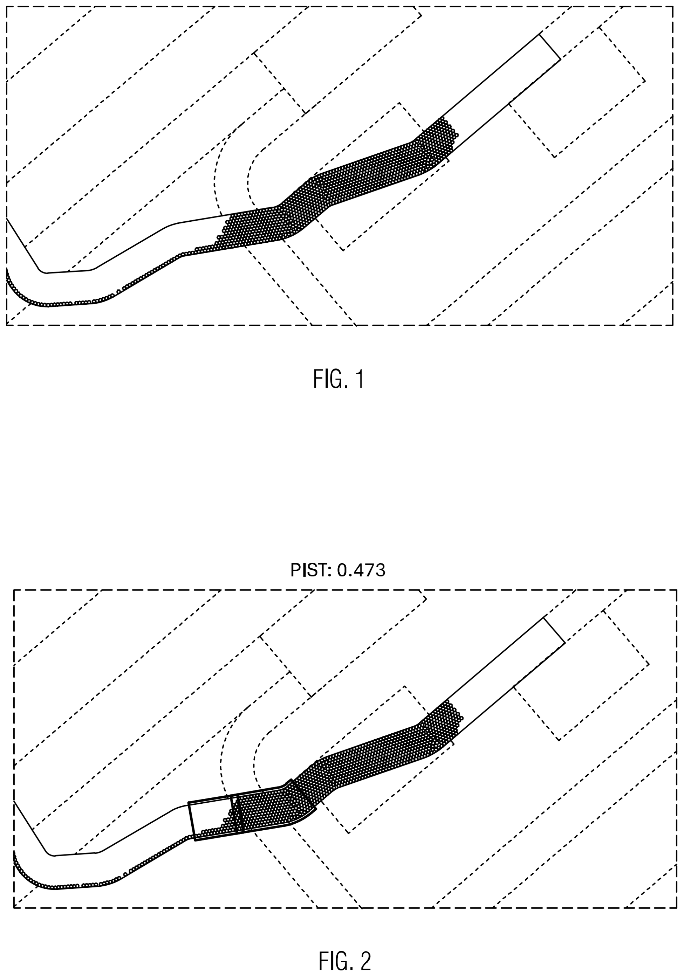

Die Figur 1 zeigt eine beispielhafte Ansicht über eine Maschinenlinie 100 aus Sicht einer Videokamera 102 zur Bilderfassung, die in einer Vogelperspektive über der Maschinenlinie 100 angebracht ist. In der beispielhaften Ansicht aus Figur 1 laufen die Behälter entlang der Fläche des Transportsystems von links im Bild nach rechts. Dabei ist bereits eine Anstauung zu erkennen, für die es sinnvoll ist, die entsprechenden Maschinengeschwindigkeiten anzupassen, um den Stau abzubauen.

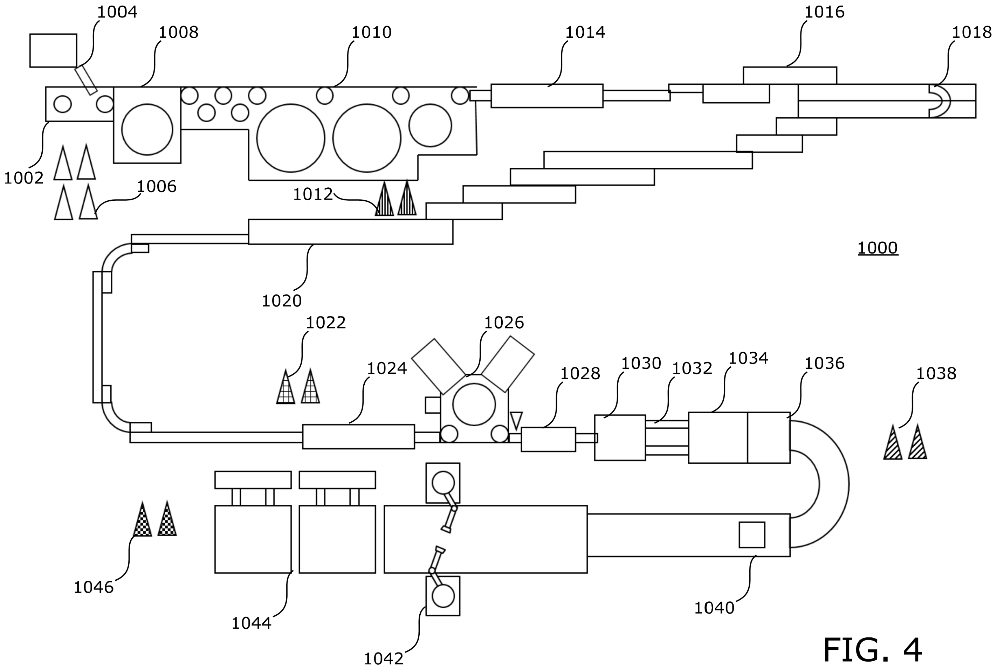

Die erste beispielhafte Implementierung wird mittels dem Segmentierungsmodell sowohl dem Transportbereich als auch den einzelnen Flaschen verschiedene Klassen zuweisen. Dadurch, dass allen Flaschen oder Getränkebehältern die jeweils gleiche Klasse zugeordnet werden, kann die Computervorrichtung 105 für jeden Frame bestimmen, wie hoch die Anzahl der entsprechenden Objektinstanzen ist und somit zu jedem Zeitpunkt genau bestimmen, wie viele Getränkebehälter sich auf dem Transportsystem befinden. Dadurch kann ein Belegungsgrad zu jedem Zeitpunkt festgestellt werden, wie er in Figur 2 auch dargestellt ist. Üblicherweise wird der Belegungsgrad mit dem Parameter PIST bezeichnet und beträgt in dem beispielhaften Bild von Figur 4 gleich 0,473. Dies ist ein normierter Wert und entspricht somit 47,3%.

Wie zusätzlich in Figur 2 zu sehen ist, können durch automatisch definierte Teilabschnitte entlang des Transportsystems der Belegungsgrad eines jeweiligen Teilabschnitts berechnet werden. Sobald innerhalb eines Staus einer der Teilabschnitte einen Belegungsgrad von unter 1 besitzt, kann somit auch das Stauende lokalisiert werden.

Gemäß einer zweiten, alternativen Implementierung kann anstatt eines Segmentierungsmodells ein Ähnlichkeitsmodell verwendet werden. Im Wesentlichen erfasst dieses Modell die Ähnlichkeit zwischen dem Bild und einem gewünschten ausgewählten Objekt mithilfe des Aufmerksamkeitsmechanismus im Transformer.

Zusammenfassend gesagt besteht das Modell aus einem Bild-Encoder, der Merkmale aus verschiedenen Regionen eines Eingangsbildes extrahiert, indem das Bild in ein Raster von Quadraten oder Vierecken unterteilt wird, um Merkmale für jedes Quadrat zu extrahieren. Zu Beginn verwendet das System die 102 Bildaufnahmevorrichtung, wie eine Videokamera 102 und einen Bildverarbeitungscomputer 105, um Daten zu erfassen. Anschließend erfolgt die automatische Auswahl der Objekte sowie des zugehörigen Puffer-oder Transportabschnitts. Der Algorithmus zählt dann die Anzahl der gewünschten Objekte in einem Video-Frame. Die genaue Messung der Belegung, der Stauposition, der Anzahl der Produkte und der Ausreißer im Massenfluss hilft zu bestimmen, ob eine Maschine ihre Ausgangsleistung anpassen oder ein Förderer seine Geschwindigkeit erhöhen sollte, um Staus und Behälteransammlungen entlang des Transportwegs oder in bestimmten Zonen zu verhindern. Darüber hinaus ermöglicht das Zählen der Produkte, die bestimmte Bereiche erreichen, zusätzliche informierte Maßnahmen, einschließlich des Stopps der Operationen, wenn Anomalien oder Ausreißer, wie fallende Flaschen, erkannt werden

Das Modell wird mit den gewünschten Objekten, die automatisch oder manuell zugewiesen werden, gefüttert und zusammen mit dem Bild codiert. Anschließend verwendet das Modell die extrahierten Merkmale, um einen Dichtewert für jedes Quadrat im Raster vorherzusagen. Dieser Wert repräsentiert im Wesentlichen die "Ähnlichkeit" dieses Quadrats mit einem Objekt oder einem Teil eines Objekts. Höhere Dichtewerte deuten dabei auf eine höhere Wahrscheinlichkeit hin, dass sich ein Objekt in diesem Quadrat befindet.

Im Detail umfasst diese zweite Implementierung wieder eine Bildquelle 102 und eine entsprechende Computervorrichtung 105 zum Bereitstellen und Ausführen eines Ähnlichkeitsmodells.

Das Ähnlichkeitsmodell ist ausgelegt zum Empfangen eines ersten Videoframes von der Bildquelle 102 und zum Festlegen einer visuellen Repräsentation eines oder mehrerer Zielobjekte, wie beispielsweise eines "korrekt stehenden Getränkebehälters". Der Videoframe wird dann zusammen mit der visuellen Repräsentation des einen oder der mehreren Zielobjekte codiert. Das Codieren kann dabei wie folgt erfolgen.

Zunächst wird der erste Videoframe in ein Raster aus viereckigen Bereichen unterteilt und Merkmale werden aus jedem der extrahierten viereckigen Bereiche extrahiert. Merkmale können insbesondere Farbbereiche, Konturen, Formen, Kanten, etc. sein. Daraufhin wird ein Dichtewert für jeden der extrahierten viereckigen Bereiche bestimmt. Diese Dichtewertbestimmung basiert auf einer Ähnlichkeit des entsprechenden viereckigen Bereichs mit der visuellen Repräsentation des einen oder der mehreren Zielobjekte oder eines Teils davon. Danach kann eine Dichtekarte für den Videoframe bestimmt werden.

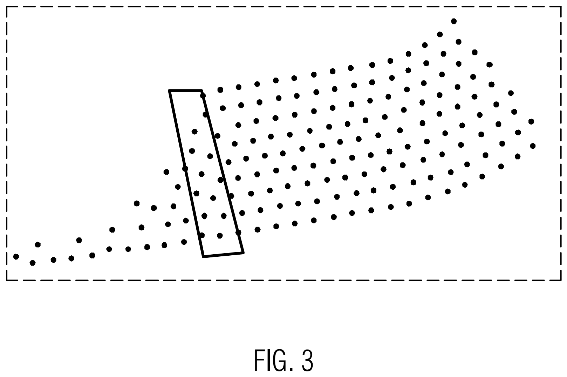

Nach dem Codieren kann die Dichtekarte des Frames in eine Verteilung einer tatsächlichen Anzahl von Zielobjekten innerhalb eines bestimmten Bereichs der Maschinenlinie umgerechnet werden. Eine beispielhafte Repräsentation eines Ausschnitts der Dichtekarte ist in Figur 3 gezeigt. Diese Dichtekarte kann von einem Algorithmus leicht verwendet werden, um die tatsächliche Anzahl von Objekten zu bestimmen.

Gemäß Ausführungsformen kann das oben beschriebene Konzept in ein logisches System integriert werden, das die gewünschten Objekte automatisch definiert, um eine Null-Intervention zu erreichen. Es ist lediglich erforderlich, dem Modell Video- oder Live-Stream-Frames bereitzustellen, und das Modell beginnt mit dem Zählen und der Erstellung einer Dichtekarte für den Massenfluss, ohne dass Eingriffe erforderlich sind.

Basierend auf der tatsächlichen Anzahl von Zielobjekten innerhalb des bestimmten Bereichs der Maschinenlinie kann somit ein Zustand der Maschinenlinie bestimmt werden und gegebenenfalls ein entsprechender Steuerparameter für die Maschinenlinie, basierend auf dem ermittelten Zustand der Maschinenlinie erzeugt werden.

Beispielsweise kann nach dem Zählen der Objekte der Belegungsgrad auf der Grundlage der Anzahl der Objekte im Verhältnis zur maximalen Anzahl der Objekte in einem bestimmten/gewünschten Bereich berechnet werden. Die Stauerkennung und -lokalisierung erfolgt durch ein entwickeltes Konzept, das die Anzahl der Objekte analysiert und den Ort des Staus erkennt, wie insbesondere in Figur 2 zu sehen.

Darüber hinaus kann das Modell mit "Ausreißern" gefüttert werden, wie beispielsweise visuelle Repräsentationen von kaputten oder umgefallenen Behältern oder von Fremdkörpern, um diese zu erkennen und entsprechend zu kennzeichnen. Bei diesem Verfahren basiert die Regelung der Ausgangsleistung der einzelnen Maschinen auf der Anzahl der durch die Ähnlichkeitsabbildung und pixelbasierte Objektezählung gefundenen Objekte in jedem Puffer-oder Transportabschnitt.

Diese zweite Implementierung ermöglicht einen automatisierten Workflow ohne Eingriff zur Bereitstellung der erforderlichen Informationen zur Steuerung und Regulierung der Maschinenleistung basierend auf präzisen Maßnahmen wie Belegung, Stauort, Anzahl der Produkte und Ausreißer, ohne dass ein neuer Datensatz gesammelt, das Modell feinabgestimmt oder erneut für einen spezifischen/neuen Fall/Aufgabe trainiert werden muss.

Das System liefert diese Funktionen lediglich auf Grundlage visueller Eingaben (Video-/Live-Stream-Bilder). Diese Idee geht über das reine Erkennen eines einzigen Objekttyps hinaus und kann potenziell diverse Objekte wie Behälter, Verschlüsse und Pakete innerhalb einer Szene identifizieren. Darüber hinaus ermöglicht das Modell in Verbindung mit einer Kamera die Überwachung und Steuerung verschiedener Prozesse und Anwendungen - sowohl live als auch offline - in verschiedenen Industrien.

Man kann sich die Anwendung im Massentransport, bei der Überwachung des Maschinenzuflusses in Pufferanlagen oder beim Verfolgen von Behälter- und Paletten Transport vorstellen. Das Konzept kann sogar zur Überwachung der Position von AGVs oder Robotern eingesetzt werden und bei der Routenplanung helfen. Zusätzlich kann es zur Sicherung von Sicherheitszonen verwendet werden, indem es das Eindringen von Objekten oder Personen erkennt. Diese Vielzahl von Anwendungen unterstreicht das Potenzial des Modells zur Lösung realer Probleme. Darüber hinaus kann es die Anzahl verschiedener Hilfsgeräte innerhalb eines Versorgungssystems verfolgen und regulieren, wie z.B. Verschlüsse, Vorformling-Tabletts, Kisten, Werbeobjekte und sogar leere Behälter, die in Puffern gelagert werden. Diese umfassende Objekterkennungs- und Überwachungsfähigkeit hat das Potenzial, die Effizienz und Sicherheit in zahlreichen Branchen zu erhöhen.

Gemäß einer dritten, alternativen Implementierung wird ein System zum Erzeugen von Steuerparametern für eine Maschinenlinie 100 mittels pixelbasierter Objektzählung bereitgestellt, dass auf einem Objekterkennungsmodell basiert. Um das System der dritten Implementierung zu starten, werden wieder eine Bildaufnahmevorrichtung 102 (wie eine Videokamera) und Bildverarbeitungscomputer 105 verwendet, um Daten zu erfassen. Anschließend erfolgt die automatische Auswahl der Objekte sowie des zugehörigen Puffer-oder Transportabschnitts. Vereinfacht gesagt, zählt der Algorithmus die Anzahl der gewünschten Objekte in einem Frame.

Das Modell besteht aus einem Bildencoder, der das Eingangsbild analysiert und seine Schlüsselfunktionen (Features) extrahiert. Ein Punkt-Decoder wird dann mit einem Raster von Schlüsselpunkten versorgt, das aus einem 2D-Array besteht und das gesamte Bild abdeckt. Diese Punkte werden automatisch zugewiesen und zusammen mit dem Bild codiert. Jeder Schlüsselpunkt kann dabei einer potenziellen Position eines Objekts oder eines Teils davon entsprechen. Der Punkt-Decoder kann ein vortrainiertes Segmentierungsmodell verwenden, um mögliche Objekte in dem Videoframe zu lokalisieren.

Anschließend werden sie in ein Format umgewandelt, mit dem das Modell arbeiten kann. In einem Masken-Dekoder werden die Informationenaus den Bild- und Punkte-Encodern zusammengeführt, um eine Maske zu generieren, die alle Objekte im Bild präzise umreißt.

Dabei kann das Modell hierarchische Masken bereitstellen, die strukturiert sind als i) Masken, die ein vollständiges Objekt umfassen, insbesondere ein vollständiger Getränkebehälter, ii) Masken, die ein Teile eines Objekts umfassen, insbesondere einen Flaschenhals oder einen Flaschenkörper, und iii) Masken für Details, insbesondere Etiketten oder Schraubverschluss einer Flasche.

Anschließend folgt ein Klassifikationsschritt, um jede Maske in ihrem eigenen Begrenzungsbereich/Box zu kombinieren und Unterobjekte sowie sehr kleine Komponenten innerhalb des Gesamtobjekts zu verwerfen oder zu fusionieren. Dieses Klassifizieren und Filtern der erstellten Masken basiert auf einer Auswahl einer Repräsentation eines oder mehrerer Zielobjekte. Durch die gefilterte Klassifizierung werden nur diese Klasse des einen oder der mehreren Zielobjekte ausgewählt.

Schließlich wird eine Anzahl von Zielobjekten basierend auf der gefilterten Klassifizierung und ein Zustand der Maschinenlinie 100 basierend auf der Anzahl von Zielobjekten ermittelt, um dann einen oder mehrere Steuerparameter für die Maschinenlinie, basierend auf dem ermittelten Zustand der Maschinenlinie zu erzeugen.

Das Modell wird einmal auf einem umfangreichen Datensatz trainiert, was es dem Modell ermöglicht, sich gut auf neue Bilder/Objekte zu verallgemeinern. Zusätzlich verwendet diese Implementierung automatisch Raster-Schlüsselpunkte, wodurch diese Implementierung zu einer Zero-Intervention-Lösung wird, bei der nur Video- oder Live-Stream-Bilder an das Modell übermittelt werden müssen, um den Massenfluss und den Transport zu maskieren, ohne dass weiteres Training oder Eingriff erforderlich ist.

Auf diese Weise werden die Objekte in jedem Bildrahmen erkannt und gezählt. Nach dem Zählen der Objekte wird die Belegung auf der Grundlage der Anzahl der Objekte im Verhältnis zur maximalen Anzahl der Objekte in einem bestimmten/gewünschten Bereich berechnet. Die Stauerkennung und -lokalisierung erfolgt durch ein entwickeltes Konzept, das die Anzahl der Objekte analysiert und den Ort des Staus erkennt. Darüber hinaus kann das Modell mit Ausreißern gefüttert werden, um diese zuerkennen und entsprechend zu kennzeichnen. Bei dieser Methode basiert die Regelung der Ausgangsleistung der einzelnen Maschinen auf der Anzahl der durch pixelbasierte Objekterkennung gefundenen Objekte für jeden Puffer- oder Transportabschnitt.

Die genaue Messung der Belegung, der Stauerkennung, der Anzahl der Produkte und der Ausreißer im Massenfluss hilft somit auch in dieser Implementierung zu bestimmen, ob eine Maschine ihre Ausgangsleistung anpassen oder ein Förderer seine Geschwindigkeit erhöhen sollte, um Staus und die Ansammlung von Behältern entlang des Transports oder in bestimmten Zonen zu verhindern. Darüber hinaus ermöglicht das Zählen der Produkte, die bestimmte Bereiche erreichen, zusätzliche informierte Maßnahmen, einschließlich der Unterbrechung des Betriebs bei der Erkennung von Anomalien/Ausreißern, wie z.B. umfallende Flaschen.

In den folgenden Figuren 4 bis 7 werden verschiedene beispielhafte Anlagenkonfigurationen für verschiedene Flaschenabfüllanlagen beschrieben, in denen die Erfindung oder wenigstens Teile und Aspekte der Erfindung implementiert werden können. Die Beschreibung der Figuren 4 bis 7 soll nur eine allgemeine Übersicht über Maschinen geben, für welche Zustandsdaten gesammelt werden können, auf deren Grundlage das LLM Benutzeranfragen verarbeiten kann.

Figur 4 zeigt eine beispielhafte Anlagenkonfiguration 1000 für PET-Flaschen oder PET-Behälter und Klebegebinde. Wie in Figur 4 zu sehen, umfasst die Anlagenkonfiguration 1000 verschiedenste Module, die eine Linie bilden, an deren Ende fertig abgefüllte PET-Behälter in Form eines Gebindes auf Paletten ausgegeben werden. Einige der Module und Maschinen können dabei optional sein und die Erfindung ist nicht auf die genaue Form und Anordnung der Anlagenkonfigurationen beschränkt.

Die Anlagenkonfiguration 1000 umfasst einen Ofen 1002 für Preforms, eine Preform-Sortierung mit Zuführmaschine 1004 und eine Blasmaschine 1008. Die Module 1002, 1004 und 1008 bilden im Allgemeinen eine Streckblasmaschine, in welcher PET-Behälter aus einem Ausgangsmaterial hergestellt und geformt werden. Die hergestellten PET-Behälter werden weitergeleitet in einen Füller 1010, in dem die Flaschen befüllt werden. Der Füller kann optional einen Rinser umfassen. In den Preforms können sich während der Lagerung oder des Transports verschiedene Partikel wie Staub, Pappe oder Reste von Holzpaletten ablagern. Mit dem Rinser lassen sich diese entfernen. Am Ende des Füllers kann ein Verschließer angeordnet sein, mittels welchem die PET-Behälter nach der Befüllung verschlossen werden.

Optional kann die Anlagenkonfiguration 1000 nach dem Füller 1010 eine Drehvorrichtung umfassen, die bei Heißabfüllung der PET-Behälter zum Einsatz kommt. Über ein oder mehrere Transportbänder 1016, die auch einen Puffer 1018 zum Zwischenladen von befüllten Behältern umfassen können werden die befüllten PET-Behälter zu einem Vereinzeler 1020 und weiter zu einer Trocknungsvorrichtung 1024 geleitet, in welcher die PET-Behälter getrocknet werden.

Nach erfolgter Trocknung werden die PET-Behälter in eine Etikettiermaschine 1026 befördert. Die Etikettiermaschine 1026 kann für verschiedene Etikettiertechniken ausgelegt sein, wie beispielsweise eine Etikettierung mittels Heißleim, Kaltleim, Selbstklebe-Etiketten oder Sleeves. Nach dem Bedrucken oder Etikettieren der PET-Behälter, werden die PET-Behälter durch eine zweite Trocknungsvorrichtung 1028, einen Linienverteiler 1030, Transportbänder 1032, eine Klebegebindeherstellung 1034 und eine Aushärtstrecke zu einem Handle-Applikator geleitet. In der Klebegebindeherstellung 1034 werden die PET-Behälter in bestimmte Gruppengrößen zusammen gruppiert und zu einem Gebinde, wie beispielsweise einem "Sixpack" verpackt. In dem Handle-Applikator wird ein Tragegriff an das Gebinde angebracht, was ein komfortables Tragen des Gebindes ermöglicht. Die fertigen Gebinde werden dann von einem Roboter 1042 zur Lagenherstellung entsprechend angeordnet und von einem Palettierer 1044 auf Paletten verpackt.

In der Anlagenkonfiguration 1000 können an verschiedenen Modulen und Maschinen sogenannte Formatwagen oder Formatregale angeordnet sein, um schnell wechselbare Formatsätze für kurze Umstellzeiten und automatischen Werkzeugwechsel zur Verfügung zu stellen. Beispiele für Formatwagen sind der Formatwagen 1006 für die Blasmaschine 1008, der Formatwagen 1012 für den Füller 1010, der Formatwagen 1022 für die Etikettiermaschine 1026, der Formatwagen 1038 für die Klebegebindeherstellung 1034 und der Formatwagen 1046 für den Palettierer 1044.

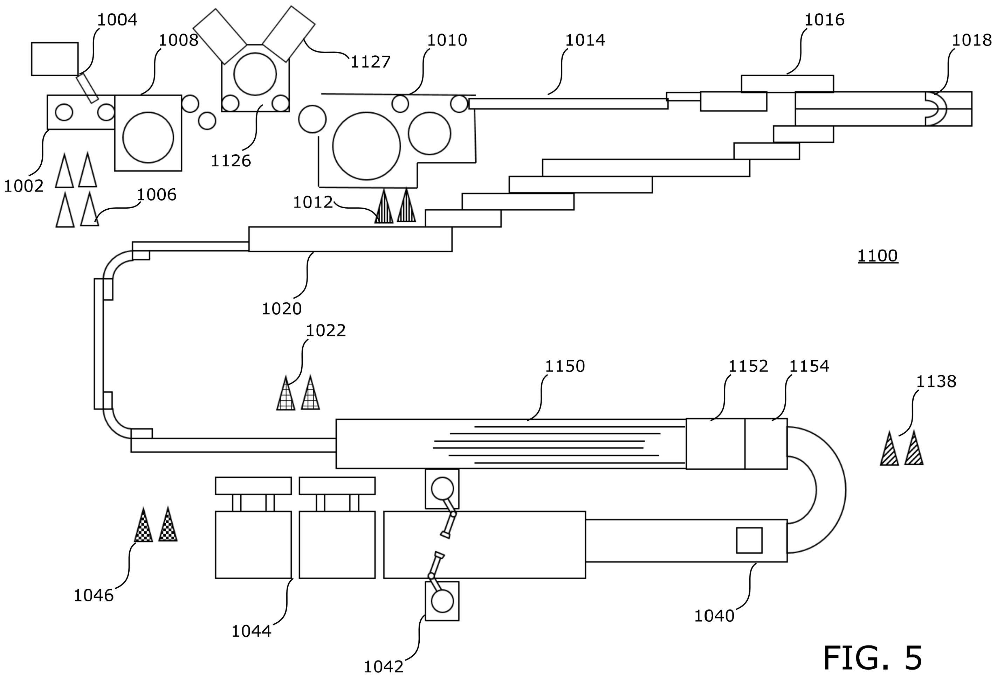

Figur 5 zeigt eine weitere beispielhafte Anlagenkonfiguration 1100 für PET-Behälter und Schrumpfpacker. Die Anlage 1100 aus Figur 5 umfasst viele der Module und Maschinen aus der Anlagenkonfiguration 1000 aus Figur 4, jedoch gibt es einige Unterschiede. Auf die Beschreibung der Module, die bereits in Zusammenhang mit Figur 4 beschrieben sind, wird daher für Figur 5 verzichtet.

Ein wesentlicher Unterschied zwischen den beiden beispielhaften Anlagenkonfigurationen 1000 und 1100 besteht darin, dass die Etikettiermaschine 1126 mit den Etikettiermodulen 1127 bereits nach der Blasmaschine 1008 und vor dem Füller 1008 installiert sein kann. Dafür kann die Anlagenkonfiguration 1100 gleich sechs Transportspuren 1150 umfassen, in die sich die PET-Behälter eindrängeln können. Nachdem die PET-Behälter sich entsprechend in eine der sechs Spuren 1150 eingedrängelt haben, werden sie in das Folieneinschlagmodul 1152 und anschließend in den Schrumpftunnel 1154 befördert.

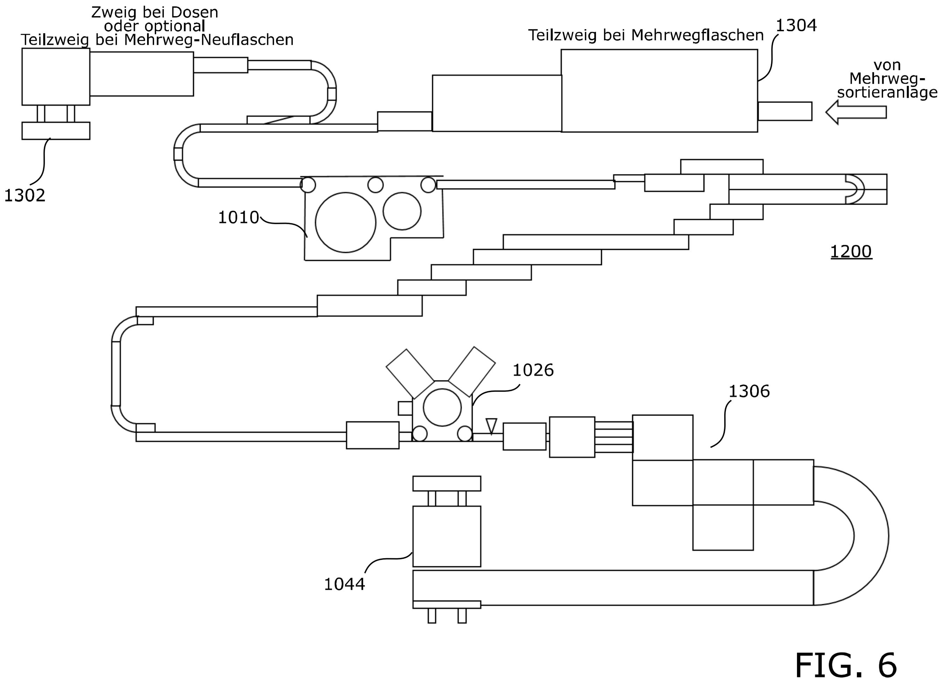

Figur 6 zeigt eine beispielhafte Anlagenkonfiguration 1200 für Dosen oder Glasflaschen. Die beispielhafte Anlagenkonfiguration 1200 aus Figur 6 hat wieder einige Ähnlichkeiten zu den Anlagenkonfigurationen 1000 und 1100 aus Figuren 4 und 5 und die Beschreibung der Anlagenkonfiguration beschränkt sich daher auf die Unterschiede der Anlagenkonfigurationen.

Wie in Figur 6 gezeigt, kann die beispielhafte Anlagenkonfiguration zwei separate Zuführungen umfassen. Eine erste Zufuhr, links in Figur 6, zeigt einen Zweig bei Dosen oder optional einen Teilzweig bei Mehrweg-Neuflaschen. Dabei werden die Behälter, d.h. Dosen oder neue Flaschen, von einem Depalettierer 1302 in die Maschine geführt, wo sie über Transportbänder zu dem Füller 1010 geführt werden. Eine zweite Zufuhr, rechts in Figur 6, zeigt einen Teilzweig bei Mehrwegflaschen, die von einer Mehrwegsortieranlage (nicht abgebildet) in die Anlage eingeleitet werden.

In dem Fall, dass die bereits benutzten Mehrwegflaschen über den Teilzweig bei Mehrwegflaschen in die Anlage 1200 eingeleitet werden, durchlaufen die Mehrwegflaschen zunächst die Reinigungsmaschine oder Waschmaschine 1304. Ein weiterer möglicher Unterschied der beispielhaften Anlagenkonfiguration 1200 ist der Umsetzpacker 1306 nach der Etikettiermaschine 1026. Der Umsetzpacker kann die Flaschen oder Dosen in eine Karton-Clip-Aufbringung oder in Kästen oder beides einsortieren.

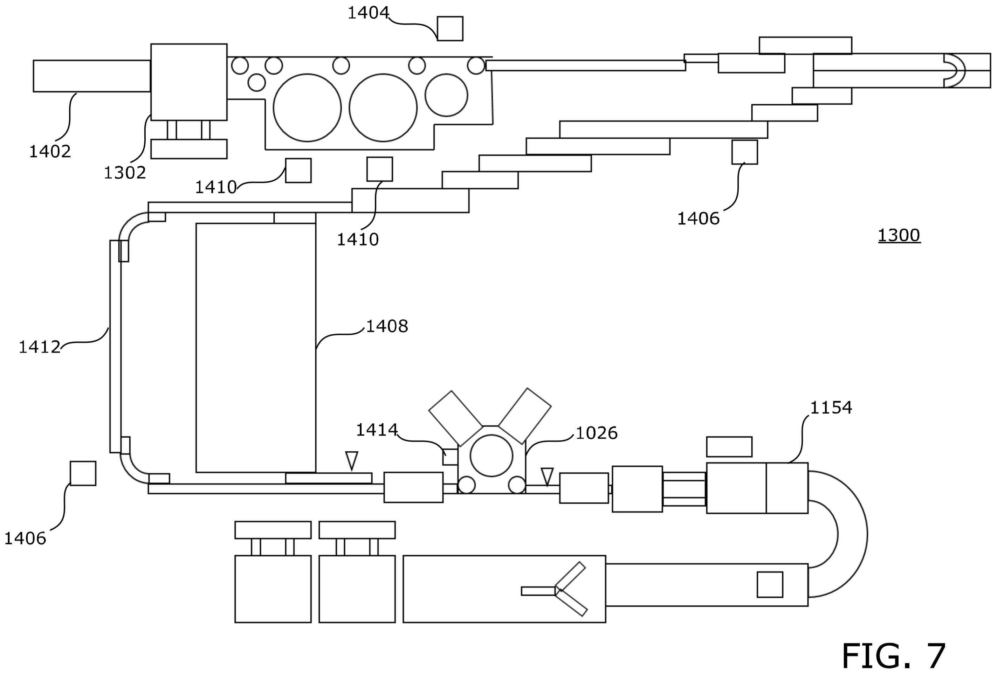

Figur 7 zeigt eine beispielhafte Anlagenkonfiguration 1300 für Dosen, in der wieder die bereits in den anderen Anlagenkonfigurationen beschriebene Elemente nicht mehr beschrieben werden. Die Dosen in der Anlagenkonfiguration 1300 werden von einem Magazin 1402 mit Dosen in den Depalettierer 1302 eingeleitet. Die Dosen werden, nachdem sie den Füller durchlaufen haben und gefüllt sind mittels Verschlussmagazin 1404 verschlossen und über die Transportbänder, wie oben beschrieben, weiter entlang der Anlage 1400 geleitet.

Der optionale Pasteur 1408 kann über den Bypass 1412 umgangen werden, falls dieser nicht benötigt wird. Im Pasteur 1408 können die frisch abgefüllten Produkte für die Konservierung pasteurisiert werden.

Im Gegensatz zu den Anlagenkonfigurationen 1000, 1100 und 1200 sind in der beispielhaften Anlagenkonfiguration 1300 verschiedene Tanks für entsprechende Verbrauchsgüter gezeigt, wie die Tanks 1410 mit Rinsflüssigkeit und/oder dem Abfüllprodukt und den Tanks 1406 mit Bandschmiermittel. Diese Tanks können auch in den bereits oben beschriebenen beispielhaften Anlagenkonfigurationen enthalten sein. In die Tanks 1406 und 1410 können beispielsweise die chemischen Produkte 106, die aus dem Mischer 110 zu den Maschinen geleitet wird, gespeichert werden.

## Patentansprüche

1. System zum Erzeugen von Steuerparametern für eine Maschinenlinie (100), insbesondere für eine Maschinenlinie zum Abfüllen und Verpacken von Lebensmitteln und/oder Getränken, wobei das System umfasst:
die Maschinenlinie;
eine Bildquelle (102) zum Bereitstellen von Videoframes, wobei die Videoframes von einer Aufnahme der Maschinenlinie sind;
eine Computervorrichtung (105), die einen Prozessor und einen mit dem Prozessor verbundenen Speicher umfasst, wobei die Computervorrichtung dazu ausgelegt ist zum Bereitstellen und Ausführen von:
einem Segmentierungsmodell, das Videoframes von der Bildquelle erhält und dazu ausgelegt ist, eine Vielzahl von Objekten in einem ersten Videoframe zu segmentieren und klassifizieren;
einem Prompt-Encoder, der mit dem Segmentierungsmodell funktionell verbunden ist und dazu ausgelegt ist, eine Auswahl von klassifizierten Objekten in dem ersten Videoframe zu treffen, wobei ein erstes klassifiziertes Objekt ein Transportabschnitt der Maschinenlinie ist, und wobei ein zweites klassifiziertes Objekt ein Getränkebehälter auf dem Transportabschnitt der Maschinenlinie ist;
einem Tracker, der dazu ausgelegt ist, alle Objekt-Instanzen aus der Klasse der ausgewählten klassifizierten Objekte in wenigstens einem folgenden Videoframe zu identifizieren und zu verfolgen,
wobei der Prozessor des Weiteren ausgelegt ist zum:
Ermitteln eines Zustands der Maschinenlinie basierend auf den Daten des Trackers, und
Erzeugen eines oder mehrerer Steuerparameter für die Maschinenlinie, basierend auf dem ermittelten Zustand der Maschinenlinie.

2. System nach Anspruch 1, wobei das Segmentierungsmodell umfasst:
einen Bildencoder, der dazu ausgelegt ist, den ersten Videoframe zu analysieren und Schlüsselfunktionen zu extrahieren;
einen Punkt-Decoder, der mit einem Raster von Schlüsselpunkten versorgt wird, das aus einem 2D-Array besteht und den ersten Videoframe abdeckt, wobei:
die Schlüsselpunkte automatisch zugewiesen werden und zusammen mit dem ersten Videoframe codiert werden,
jeder Schlüsselpunkt einer potenziellen Position eines Objekts oder eines Teils davon entspricht,
der Punkt-Decoder ein vortrainiertes Segmentierungsmodell verwendet, um mögliche Objekte in dem Videoframe zu lokalisieren, und
einen Masken-Decoder, der dazu ausgelegt ist, die Informationen aus dem Bild-Encoder und dem Punkt-Decoder zusammenzuführen, um eine Maske zu generieren, die alle Objekte in dem Videoframe umreißt.

3. System nach Anspruch 1 oder 2, wobei der ermittelte Zustand der Maschinenlinie (100) umfasst:
einen Belegungsgrad des Transportabschnitts; und/oder
eine Anzahl von Getränkebehältern auf dem Transportabschnitt; und/oder
einen Stau der Getränkebehälter auf dem Transportabschnitt; und/oder
einer Anomalie eines oder mehrerer Getränkebehälter.

4. System nach einem der Ansprüche 1 bis 3, wobei der Prompt-Encoder dazu ausgelegt ist, eine Benutzer-Eingabe zu empfangen, wobei die Benutzer-Eingabe ein oder mehrere klassifizierte Objekte auszuwählen.

5. System nach einem der Ansprüche 1 bis 4, wobei:
das Segmentierungsmodell auf Transformer-Technologie basiert, wobei mittels Self-Attention-Mechanismen und positioneller Kodierung globale und kontextuelle Beziehungen zwischen Bildbereichen erfasst werden, um eine präzise Objekterkennung und Segmentierung zu ermöglichen, und
das Segmentierungsmodell mit einem Datensatz trainiert wurde, der eine Anzahl von beschrifteten Masken umfasst, wobei der Datensatz so groß ist, dass das Segmentierungsmodell für eine Vielzahl von Eingabefällen oder Anwendungsfällen einsetzbar ist, ohne das Segmentierungsmodell auf einem neuen Datensatz neu trainiert oder feinabgestimmt werden muss.

6. System zum Erzeugen von Steuerparametern für eine Maschinenlinie (100), insbesondere für eine Maschinenlinie zum Abfüllen und Verpacken von Lebensmitteln und/oder Getränken, wobei das System umfasst:
die Maschinenlinie (100);
eine Bildquelle (102) zum Bereitstellen von Videoframes, wobei die Videoframes von einer Aufnahme der Maschinenlinie sind;
eine Computervorrichtung (105), die einen Prozessor und einen mit dem Prozessor verbundenen Speicher umfasst, wobei die Computervorrichtung zum Bereitstellen und Ausführen eines Ähnlichkeitsmodells ausgelegt ist, das einen Bild-Encoder umfasst, wobei Ähnlichkeitsmodell ausgelegt ist zum:
Empfangen eines ersten Videoframes von der Bildquelle;
Festlegen einer visuellen Repräsentation eines oder mehrerer Zielobjekte;
Codieren des ersten Videoframes zusammen mit der visuellen Repräsentation des einen oder der mehreren Zielobjekte, wobei das Codieren umfasst:
Unterteilen des ersten Videoframes in ein Raster aus viereckigen Bereichen,
Extrahieren von Merkmalen aus jedem der extrahierten viereckigen Bereiche,
Bestimmen eines Dichtewertes für jedes der extrahierten viereckigen Bereiche basierend auf einer Ähnlichkeit des entsprechenden viereckigen Bereichs mit der visuellen Repräsentation des einen oder der mehreren Zielobjekte oder eines Teils davon, und
Erstellen einer Dichtekarte für den ersten Videoframe,
Umwandeln der Dichtekarte des ersten Videoframes in eine Verteilung einer tatsächlichen Anzahl von Zielobjekten innerhalb eines bestimmten Bereichs der Maschinenlinie;
Ermitteln eines Zustands der Maschinenlinie basierend auf der tatsächlichen Anzahl von Zielobjekten innerhalb des bestimmten Bereichs der Maschinenlinie; und
Erzeugen eines oder mehrerer Steuerparameter für die Maschinenlinie, basierend auf dem ermittelten Zustand der Maschinenlinie.

7. System nach Anspruch 6, wobei der ermittelte Zustand der Maschinenlinie (100) umfasst:
einen Belegungsgrad des Transportabschnitts; und/oder
eine Anzahl von Getränkebehältern auf dem Transportabschnitt; und/oder
einen Stau der Getränkebehälter auf dem Transportabschnitt; und/oder
einer Anomalie eines oder mehrerer Getränkebehälter.

8. System nach Anspruch 6 oder 7, wobei:
das Zielobjekt ein korrekt stehender Getränkebehälter auf dem Transportabschnitt der Maschinenlinie ist; und/oder
wobei das Zielobjekt ein Getränkebehälter in einer inkorrekten Lage auf dem Transportabschnitt der Maschinenlinie ist; und/oder
wobei das Zielobjekt ein Fremdkörper auf dem Transportabschnitt der Maschinenlinie ist.

9. System nach einem der Ansprüche 6 bis 8, wobei:
das Ähnlichkeitsmodell auf Transformer-Technologie basiert, wobei mittels Self-Attention-Mechanismen und positioneller Kodierung globale und kontextuelle Beziehungen zwischen Bildbereichen erfasst werden, um eine präzise Objekterkennung und Segmentierung zu ermöglichen, und
das Ähnlichkeitsmodell mit einem Datensatz trainiert wurde, der eine Anzahl von beschrifteten Masken umfasst, wobei der Datensatz so groß ist, dass das Segmentierungsmodell für eine Vielzahl von Eingabefällen oder Anwendungsfällen einsetzbar ist, ohne das Ähnlichkeitsmodell auf einem neuen Datensatz neu trainiert oder feinabgestimmt werden muss.

10. System zum Erzeugen von Steuerparametern für eine Maschinenlinie (100) mittels pixelbasierter Objektzählung, insbesondere für eine Maschinenlinie zum Abfüllen und Verpacken von Lebensmitteln und/oder Getränken, wobei das System umfasst:
die Maschinenlinie;
eine Bildquelle (102) zum Bereitstellen von Videoframes, wobei die Videoframes von einer Aufnahme der Maschinenlinie sind;
eine Computervorrichtung (105), die einen Prozessor und einen mit dem Prozessor verbundenen Speicher umfasst, wobei die Computervorrichtung zum Bereitstellen und Ausführen eines Objekterkennungsmodells ausgelegt ist, wobei das Objekterkennungsmodell ausgelegt ist zum:
Empfangen eines ersten Videoframes von der Bildquelle,
Analysieren des ersten Videoframes, mittels eines Bild-Encoders, um Features aus dem Videoframe zu extrahieren,
Überlagern des ersten Videoframes mit Schlüsselpunkten, mittels eines Punkt-Decoders, in einer 2D-Gitterstruktur, wobei jeder Schlüsselpunkt einer potenziellen Position eines Objekts oder eines Teils davon entspricht, wobei der Punkt-Decoder ein vortrainiertes Segmentierungsmodell verwendet, um mögliche Objekte in dem Videoframe zu lokalisieren,
Zusammenführen, mittels eines Masken-Decoders, der extrahierten Features vom Bild-Encoder und der Schlüsselpunkte, um pixelgenaue Masken von erkannten Objekten in dem ersten Videoframe zu erstellen,
Klassifizieren und Filtern der erstellten Masken basierend auf einer Auswahl einer Repräsentation eines oder mehrerer Zielobjekte umfasst, und wobei durch die gefilterte Klassifizierung nur die Klasse des einen oder der mehreren Zielobjekte ausgewählt werden,
Ermitteln einer Anzahl von Zielobjekten basierend auf der gefilterten Klassifizierung und Ermitteln eines Zustands der Maschinenlinie basierend auf der Anzahl von Zielobjekten; und
Erzeugen eines oder mehrerer Steuerparameter für die Maschinenlinie, basierend auf dem ermittelten Zustand der Maschinenlinie.

11. System nach Anspruch 10, wobei die Masken hierarchisch strukturiert sind als:
Masken, die ein vollständiges Objekt umfassen, insbesondere ein vollständiger Getränkebehälter,
Masken, die ein Teile eines Objekts umfassen, insbesondere einen Flaschenhals oder einen Flaschenkörper, und
Masken für Details, insbesondere Etiketten oder Schraubverschluss einer Flasche.

12. System nach Anspruch 10 oder 11, wobei der ermittelte Zustand der Maschinenlinie (100) umfasst:
einen Belegungsgrad des Transportabschnitts; und/oder
eine Anzahl von Getränkebehältern auf dem Transportabschnitt; und/oder
einen Stau der Getränkebehälter auf dem Transportabschnitt; und/oder
einer Anomalie eines oder mehrerer Getränkebehälter.

13. Verfahren zum Erzeugen von Steuerparametern für eine Maschinenlinie (100), insbesondere für eine Maschinenlinie zum Abfüllen und Verpacken von Lebensmitteln und/oder Getränken, wobei das Verfahren umfasst:
Segmentieren und Klassifizieren einer Vielzahl von Objekten in einem ersten Videoframe eines Videostreams, wobei der Videostream von einer Aufnahme der Maschinenlinie ist;
Treffen einer Auswahl von klassifizierten Objekten in dem ersten Videoframe, wobei ein erstes klassifiziertes Objekt ein Transportabschnitt der Maschinenlinie ist, und wobei ein zweites klassifiziertes Objekt ein Getränkebehälter auf dem Transportabschnitt der Maschinenlinie ist;
Identifizieren und Verfolgen aller Objekt-Instanzen aus der Klasse der ausgewählten klassifizierten Objekte in wenigstens einem folgenden Videoframe des Videostreams;
Ermitteln eines Zustands der Maschinenlinie basierend auf den verfolgten Objekt-Instanzen, und
Erzeugen eines oder mehrerer Steuerparameter für die Maschinenlinie, basierend auf dem ermittelten Zustand der Maschinenlinie.

14. Verfahren zum Erzeugen von Steuerparametern für eine Maschinenlinie (100), insbesondere für eine Maschinenlinie zum Abfüllen und Verpacken von Lebensmitteln und/oder Getränken, wobei das Verfahren umfasst:
Empfangen eines ersten Videoframes eines Videostreams, wobei der Videostream von einer Aufnahme der Maschinenlinie ist;
Festlegen einer visuellen Repräsentation eines oder mehrerer Zielobjekte;
Codieren des ersten Videoframes zusammen mit der visuellen Repräsentation des einen oder der mehreren Zielobjekte, wobei das Codieren umfasst:
Unterteilen des ersten Videoframes in ein Raster aus viereckigen Bereichen,
Extrahieren von Merkmalen aus jedem der extrahierten viereckigen Bereiche,
Bestimmen eines Dichtewertes für jedes der extrahierten viereckigen Bereiche basierend auf einer Ähnlichkeit des entsprechenden viereckigen Bereichs mit der visuellen Repräsentation des einen oder der mehreren Zielobjekte oder eines Teils davon, und
Erstellen einer Dichtekarte für den ersten Videoframe,
Umwandeln der Dichtekarte des ersten Videoframes in eine Verteilung einer tatsächlichen Anzahl von Zielobjekten innerhalb eines bestimmten Bereichs der Maschinenlinie;
Ermitteln eines Zustands der Maschinenlinie basierend auf der tatsächlichen Anzahl von Zielobjekten innerhalb des bestimmten Bereichs der Maschinenlinie; und
Erzeugen eines oder mehrerer Steuerparameter für die Maschinenlinie, basierend auf dem ermittelten Zustand der Maschinenlinie.

15. Verfahren zum Erzeugen von Steuerparametern für eine Maschinenlinie mittels pixelbasierter Objektzählung, insbesondere für eine Maschinenlinie (100) zum Abfüllen und Verpacken von Lebensmitteln und/oder Getränken, wobei das Verfahren umfasst:
Empfangen eines ersten Videoframes eines Videostreams, wobei der Videostream von einer Aufnahme der Maschinenlinie ist,
Analysieren des ersten Videoframes, mittels eines Bild-Encoders, um Features aus dem Videoframe zu extrahieren,
Überlagern des ersten Videoframes mit Schlüsselpunkten, mittels eines Punkt-Decoders, in einer 2D-Gitterstruktur, wobei jeder Schlüsselpunkt einer potenziellen Position eines Objekts oder eines Teils davon entspricht, wobei der Punkt-Decoder ein vortrainiertes Segmentierungsmodell verwendet, um mögliche Objekte in dem Videoframe zu lokalisieren,
Zusammenführen, mittels eines Masken-Decoders, der extrahierten Features vom Bild-Encoder und der Schlüsselpunkte, um pixelgenaue Masken von erkannten Objekten in dem ersten Videoframe zu erstellen,
Klassifizieren und Filtern der erstellten Masken basierend auf einer Benutzereingabe, wobei die Benutzereingabe eine Auswahl einer Repräsentation eines oder mehrerer Zielobjekte umfasst, und wobei durch die gefilterte Klassifizierung nur die Klasse des einen oder der mehreren Zielobjekte ausgewählt werden,
Ermitteln einer Anzahl von Zielobjekten basierend auf der gefilterten Klassifizierung und Ermitteln eines Zustands der Maschinenlinie basierend auf der Anzahl von Zielobjekten; und
Erzeugen eines oder mehrerer Steuerparameter für die Maschinenlinie, basierend auf dem ermittelten Zustand der Maschinenlinie.
